(19) Europäisches Patentamt
European Patent Office
Office européen des brevets

(11) **EP 2 259 521 B1**

(12) **FASCICULE DE BREVET EUROPEEN**

(45) Date de publication et mention de la délivrance du brevet:
**21.03.2018 Bulletin 2018/12**

(51) Int Cl.:
*H04L 25/03* ^(2006.01)    *H04L 27/00* ^(2006.01)

(21) Numéro de dépôt: **10005392.5**

(22) Date de dépôt: **25.05.2010**

(54) **Demodulateur DVB-S2**

DVB-S2 Demodulator

Demodulator DVB-S2

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **05.06.2009 FR 0902720**

(43) Date de publication de la demande:
**08.12.2010 Bulletin 2010/49**

(73) Titulaire: **STMicroelectronics (Grenoble 2) SAS 38000 Grenoble (FR)**

(72) Inventeur: **Meyer, Jacques 38950 Saint-Martin-Le-Vinoux (FR)**

(74) Mandataire: **Casalonga, Axel Casalonga & Partners Bayerstrasse 71-73 80335 München (DE)**

(56) Documents cités:
**EP-A2- 1 089 457**

- **KUN-CHIEN HUNG ET AL: "Joint carrier recovery and multimodulus blind decision-feedback equalization under high-order QAM" PROCEEDINGS OF THE IEEE GLOBAL TELECOMMUNICATIONS CONFERENCE, vol. 4, 29 novembre 2004 (2004-11-29), pages 2281-2285, XP010757936 DALLAS, TX, USA ISBN: 978-0-7803-8794-2**

**Description**

La présente invention concerne la réception de signaux de systèmes de communication par satellite et en particulier de signaux conformes à la norme DVB-S2 (Digital Video Broadcasting - Satellite 2nd génération). La norme DVB-S2 permet de transmettre un ou plusieurs flux audio ou vidéo MPEG-2 or MPEG-4, modulés en n-PSK (Phase-Shift Keying à n phases) ou n-APSK (Amplitude and Phase Shift Keying à n-phases), par exemple en QPSK, 8PSK ou 16/32APSK.

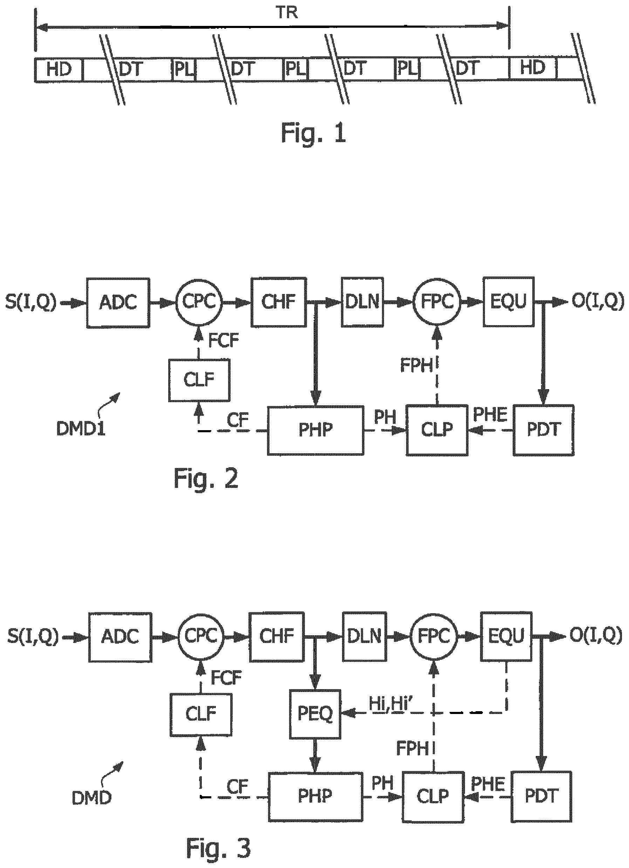

Un signal DVB-S2 comprend une succession de symboles organisée en trames de plusieurs milliers de symboles. La figure 1 représente une trame DVB-S2. Sur la figure 1, la trame TR comprend une entête HD de 90 symboles et des blocs de données DT de 1440 symboles séparés par des blocs de 36 symboles pilotes PL. L'entête HD annonce l'organisation de la trame en précisant la modulation employée, à savoir QPSK, 8PSK, 16APSK ou 32APSK, un taux de redondance du codage des données parmi une dizaine de possibilités, la longueur de la trame entre une trame longue ou une trame courte, et la présence ou non de blocs pilotes PL.

Les blocs pilotes qui sont connus du récepteur du signal DVB-S2, permettent par corrélation d'estimer précisément la phase du signal reçu, et ainsi de suivre cette phase même en présence d'importantes perturbations de transmission. Les blocs pilotes permettent ainsi de compenser un bruit de phase introduit par des changements de fréquence subis par le signal depuis son émission. La principale perturbation subie par le signal transmis est un bruit généralement blanc et Gaussien pour un canal de transmission d'un satellite. Les changements de fréquence subis par le signal transmis sont introduits successivement par l'émetteur, le transpondeur du satellite, la tête universelle faible bruit LNB (Low-Noise Block) et le tuner du récepteur. Ces changements de fréquence introduisent un bruit de phase relativement important que le récepteur doit estimer et compenser. Par ailleurs, la fréquence de base du signal reçu peut varier dans une plage relativement importante (plusieurs MHz) en raison de la précision limitée de certains éléments de la chaîne de réception, et en particulier de la tête LNB.

La forme du signal DVB-S2 et les perturbations à prendre en compte imposent certaines contraintes sur l'architecture d'un démodulateur de signal DVB-S2. Un décalage (offset) de fréquence de porteuse doit être compensé avant d'effectuer un filtrage de canal. En effet, si le décalage de fréquence est de 5 MHz et le canal présente une largeur de 10 MHz, un filtrage de canal avant compensation du décalage en fréquence aurait pour effet de remplacer 5 MHz de bande de fréquence utile par du bruit et/ou par une bande de même largeur du canal adjacent. L'exploitation des symboles pilotes pour suivre la phase du signal reçu suppose une connaissance de l'état futur des symboles pilotes avant de pouvoir décoder un symbole. Il est donc nécessaire de retarder le signal d'au moins un intervalle entre deux blocs pilotes, soit 1440 symboles, avant de pouvoir estimer correctement la phase des symboles de données entre les deux blocs pilotes.

La figure 2 représente schématiquement un exemple de démodulateur de signaux DVB-S2. Sur la figure 2, le démodulateur DMD1 reçoit d'un tuner un signal S comprenant une composante en phase I et une composante en quadrature Q. Le démodulateur comprend un module de conversion analogique / numérique ADC, un module de correction grossière en fréquence CPC, un module de filtrage de canal CHF, un module de traitement des entêtes et des symboles pilotes PHP, un filtre de boucle de décalage en fréquence de porteuse CLF, une ligne à retard DLN, un module de correction fine de la phase FPC, un module d'égalisation EQU, un module de détection de phase PDT et un filtre de boucle de phase CLP.

Le module ADC numérise le signal S à une fréquence d'échantillonnage élevée (typiquement 100 à 150 Mhz). Le module CPC applique au signal S numérisé une translation en fréquence pour corriger grossièrement le décalage en fréquence de porteuse. Le signal translaté en fréquence à la sortie du module CPC est fournit au module CHF. Le module CHF filtre et ré-échantillonne le signal translaté en fréquence à un multiple de la fréquence symbole du signal S. Le module CHF permet ainsi notamment de supprimer le bruit en dehors d'un canal. Les entêtes HD du signal ré-échantillonné peuvent ainsi être décodées, de manière à permettre le décodage des données transmises dans le signal S. Le signal ré-échantillonné est ainsi transmis au module PHP. Parallèlement le signal ré-échantillonné traverse la ligne à retard DLN retardant le signal le temps nécessaire au module PHP pour fournir des informations permettant de décoder les données du signal S. Le module CLF effectue un filtrage du décalage de fréquence de porteuse mesurée par le module PHP et fournit une valeur filtrée au module CPC qui exploite cette valeur pour corriger la fréquence du signal. Le module PHP exploite deux blocs pilotes PL successifs du signal S pour reconstituer l'évolution de la phase du signal ré-échantillonné contenant les données à décoder entre les deux blocs PL. La phase de ce signal peut ainsi être par exemple obtenue par interpolation à partir des phases des deux blocs PL successifs. Le retard appliqué au signal par la ligne à retard DLN est donc supérieur au nombre de symboles entre deux blocs pilotes PL. Le module PHP fournit une valeur de correction de la phase qui est traitée par le module CLP avant d'être fournie au module de correction fine de la phase FPC. Le module FPC corrige la phase des symboles de données issus de la ligne à retard DLN en fonction des valeurs de correction filtrées par le module CLP. Le module FPC fournit un signal de données corrigé en phase au module d'égalisation EQU. Le module d'égalisation EQU comprend classiquement un égaliseur de type auto-adaptatif qui utilise les symboles connus ou estimés pour corriger des coefficients d'égalisation. En effet, le signal S peut avoir subi des distorsions harmoniques qui peuvent avoir plusieurs causes. En particulier, ces distorsions peuvent provenir de filtres du transpondeur du satellite qui introduisent un retard de groupe sur les bords du spectre du signal. Ces distorsions peuvent également provenir de filtres en bande de base entre le tuner du récepteur et le convertisseur analogique / numérique. Ces distorsions peuvent aussi provenir de l'inadaptation des impédances dans un câble de transmission entre l'antenne parabolique de réception et le décodeur, cette inadaptation pouvant provoquer des échos et des perturbations d'amplitude et de phase en fonction de la fréquence.

Le module PHP reconstitue la phase du signal entre deux blocs pilotes consécutifs en réalisant des mesures de phase sur ces derniers par corrélation. En cas de sévères distorsions harmoniques, les mesures de phase sont également perturbées et l'erreur de phase résiduelle se trouve augmentée, diminuant ainsi la performance du démodulateur. Il apparaît alors nécessaire d'augmenter le niveau minimum du rapport signal sur bruit pour une transmission sans erreur, ce qui réduit l'efficacité de la transmission. En outre, le décodage des entêtes HD peut également être perturbé. Dans certains modes de transmission sans pilotes, notamment les modes dits ACM (Adaptative Coding and Modulation), les entêtes peuvent être les seules informations fiables permettant de suivre une éventuelle dérive en fréquence du bloc LNB lorsque le niveau de bruit ne permet que de décoder les données avec une protection maximum.

Pour s'affranchir des sévères distorsions harmoniques que peut subir un signal DVB-S2, il a déjà été proposé de refaire un décodage des symboles pilotes après égalisation et de traiter le signal résultant dans une autre boucle de phase. Cette solution s'avère coûteuse puisqu'elle nécessite la mise en oeuvre d'une autre ligne à retard pour effectuer une interpolation entre deux blocs pilotes PL successifs après égalisation. De plus cette solution n'améliore pas les entêtes HD avant leur décodage. Il a également été proposé d'effectuer une égalisation avant décodage des symboles pilotes. Au moment de l'égalisation, on ne dispose donc pas de données connues ou estimées puisqu'elles peuvent être affectées d'une erreur de phase ou de fréquence importante. La mise à jour de coefficients de l'égaliseur doit être effectuée par des algorithmes dits "aveugles" qui sont moins performants et plus lents à converger que les algorithmes auto-adaptatifs utilisant des données connues ou estimées.

Le document "Joint carrier recovery and multi modulus blind decision-feedback equalization under high-order QAM", Kun-Chien Hung et al., Proceedings of the IEEE Global Télécommunications Conférence (GLOBECOM), vol. 4 , 29 nov. 2004, p. 2281-2285, décrit une structure de démodulation de signaux QAM d'ordre élevé. Cette structure associe une boucle de détection de porteuse avec un égaliseur aveugle à rétroaction de décision.

Il est souhaitable de réaliser un démodulateur qui améliore à moindre coût la qualité des entêtes et des symboles pilotes, et qui supprime ou réduit le bruit engendré par les distorsions harmoniques.

Un mode de réalisation concerne un procédé de démodulation d'un signal modulé, comprenant des étapes consistant à : recevoir un signal modulé en n-PSK ou n-APSK comprenant une succession de symboles organisés en trames comportant chacune une entête suivie de blocs de symboles de données séparés par des blocs de symboles pilotes, appliquer au signal reçu une correction en fréquence et filtrer le signal corrigé en fréquence pour supprimer du bruit en dehors d'un canal de transmission du signal, déterminer la phase des entêtes et des blocs pilotes pour prédire l'évolution de la phase du signal, corriger la phase des symboles de données en fonction de l'évolution de la phase du signal, et égaliser les symboles de données corrigés en phase utilisant des coefficients d'égalisation évalués à l'aide de symboles estimés ou connus du signal. Selon un mode de réalisation, le procédé comprend une étape de pré égalisation des symboles d'entête, pilotes et de données, effectuée avant la détermination de la phase des entêtes et des blocs pilotes, et utilisant les coefficients d'égalisation évalués pour l'égalisation des symboles de données.

Selon un mode de réalisation, la phase d'un symbole de données est ajustée en fonction d'une phase déterminée par interpolation entre des phases déterminées pour des blocs pilotes précédent et suivant le symbole de données.

Selon un mode de réalisation, le procédé comprend des étapes de mesure d'un décalage de fréquence de porteuse et de correction du signal en fonction du décalage de fréquence de porteuse.

Selon un mode de réalisation, l'égalisation et la pré égalisation sont effectuées avec des filtres de type FIR utilisant au moins en partie les mêmes coefficients d'égalisation calculés pour le filtre d'égalisation.

Selon un mode de réalisation, l'égalisation et la pré égalisation sont chacune effectuées à l'aide d'un égaliseur de type FFE connecté en série avec un filtre de type DFE.

Selon un mode de réalisation, l'égalisation et la pré égalisation sont effectuées avec de filtres de type FIR, le ou les filtres FIR de la pré égalisation utilisant uniquement des coefficients d'égalisation significatifs utilisés pour l'égalisation.

Selon un mode de réalisation, l'égalisation est effectuée à l'aide d'un premier filtre de type FIR et d'un second filtre de type FIR connectés à l'entrée d'un additionneur, la pré égalisation étant effectuée à l'aide d'un troisième filtre de type FIR utilisant les mêmes coefficients d'égalisation que le premier filtre de type FIR, et un filtre de type IIR à un étage utilisant un coefficient d'égalisation principal du second filtre de type FIR, le troisième filtre de type FIR et le filtre de type IIR étant connectés à l'entrée d'un additionneur.

Selon un mode de réalisation, l'égalisation est effectuée à l'aide d'un premier filtre de type FIR et d'un second filtre de type FIR connectés à l'entrée d'un additionneur, la pré égalisation étant effectuée à l'aide d'un troisième filtre de type FIR utilisant les mêmes coefficients d'égalisation que le premier filtre de type FIR, connecté en série avec un quatrième filtre de type FIR à un étage utilisant un coefficient d'égalisation principal inversé du second filtre de type FIR.

Selon un mode de réalisation, le procédé comprend une étape de remplacement de chaque symbole de données dans le signal reçu par un symbole dont l'amplitude et la phase correspondent à celles d'un point de constellation de modulation le plus proche d'un point ayant l'amplitude et la phase du symbole de données.

L'invention concerne également un démodulateur d'un signal modulé en n-PSK ou n-APSK comprenant une succession de symboles organisés en trames comportant chacune une entête suivie de blocs de symboles de données séparés par des blocs de symboles pilotes. Selon un mode de réalisation, le démodulateur est configuré pour mettre en oeuvre le procédé défini précédemment, le démodulateur comprenant un égaliseur pour égaliser des symboles de données du signal reçu corrigés en phase, utilisant des coefficients d'égalisation évalués à l'aide de symboles estimés ou connus du signal, et un pré égaliseur pour égaliser les symboles d'entête et pilotes avant qu'ils soient corrigés en phase, en utilisant les coefficients d'égalisation évalués par l'égaliseur.

Selon un mode de réalisation, le démodulateur comprend une boucle de correction de décalage en fréquence de porteuse, configurée pour mesurer un décalage en fréquence de porteuse, et corriger le signal à démoduler en fonction de mesures de décalage en fréquence de porteuse.

Selon un mode de réalisation, le démodulateur comprend une boucle à verrouillage de phase configurée pour déterminer une phase de chaque symbole de données reçu à partir de phases mesurées de symboles pilotes transmis avant et après le symbole de données, et pour appliquer un déphasage au symbole de données en fonction de la phase déterminée.

Selon un mode de réalisation, l'égaliseur et le pré égaliseur comprennent des filtres de type FIR utilisant au moins en partie les mêmes coefficients d'égalisation calculés pour l'égaliseur.

Selon un mode de réalisation, l'égaliseur comprend un égaliseur de type FFE connecté en série avec un filtre de type DFE, l'égaliseur de type DFE comprenant un circuit de calcul de coefficients d'égalisation des égaliseurs de type FFE et DFE, le pré égaliseur comprenant un filtre de type FFE et un filtre de type DFE connectés à l'entrée d'un additionneur, et pouvant utiliser uniquement des coefficients d'égalisation significatifs utilisés par l'égaliseur.

Selon un mode de réalisation, l'égaliseur comprend un filtre de type FFE et un filtre de type FIR connectés à l'entrée d'un additionneur, et un circuit de calcul des coefficients d'égalisation des filtres de type FFE et FIR, le pré égaliseur comprenant un filtre de type FFE utilisant les mêmes coefficients d'égalisation que le filtre de type FFE de l'égaliseur, et un filtre de type IIR à un étage utilisant un coefficient d'égalisation principal du filtre de type FIR de l'égaliseur, le filtre de type FFE de pré égalisation et le filtre de type IIR étant connectés à l'entrée d'un additionneur.

Selon un mode de réalisation, l'égaliseur comprend un filtre de type FFE et un filtre de type FIR connectés à l'entrée d'un additionneur, et un circuit de calcul des coefficients d'égalisation des filtres de type FFE et DFE, le pré égaliseur comprenant un filtre de type FFE utilisant les mêmes coefficients correction que le filtre de type FFE de l'égaliseur, en série avec un filtre de type FIR à un étage utilisant un coefficient d'égalisation principal inversé du filtre de type FIR de l'égaliseur.

Selon un mode de réalisation, l'égaliseur est configuré pour remplacer chaque symbole de données dans le signal reçu par un symbole dont l'amplitude et la phase correspondent à celles d'un point de constellation de modulation le plus proche d'un point ayant l'amplitude et la phase du symbole de données.

Des exemples de réalisation de l'invention seront décrits dans ce qui suit, à titre non limitatif en relation avec les figures jointes parmi lesquelles :

- la figure 1 décrite précédemment représente une trame d'un signal conforme au standard DVB-S2,
- la figure 2 décrite précédemment représente schématiquement un démodulateur de signal DVB-S2, selon l'art antérieur,
- la figure 3 représente schématiquement un démodulateur de signal DVB-S2, selon un mode de réalisation,
- les figures 4 et 5 représentent schématiquement des modes de réalisation de modules du démodulateur de la figure 3,
- la figure 6 représente un exemple de forme de signal traité par le démodulateur,
- les figures 7 à 12 représentent schématiquement des modes de réalisation d'autres modules du démodulateur de la figure 3.

La figure 3 représente un démodulateur d'un récepteur de signal DVB-S2. Sur la figure 3, le démodulateur DMD reçoit d'un tuner un signal S comprenant une composante en phase I et une composante en quadrature Q. Le signal S est seulement quasiment en bande de base car un décalage important de fréquence de porteuse peut subsister, typiquement de quelques MHz. Dans le cas d'un signal DVB-S2, le signal présente une fréquence symbole de 1 à 45 Méga symboles par seconde. Le démodulateur DMD comprend un module de conversion analogique / numérique ADC, un module de correction grossière en fréquence CPC, un module de filtrage de canal et de ré-échantillonnage CHF, un module de traitement des entêtes et des symboles pilotes PHP, une ligne à retard DLN, un filtre de boucle de décalage en fréquence CLF, un module de correction fine de la phase FPC, un module d'égalisation EQU, un module de détection de phase PDT et un filtre de boucle de phase CLP.

Le module ADC numérise le signal S à une fréquence d'échantillonnage élevée (typiquement 100 à 150 Mhz). Le module ADC peut comparer la puissance du signal S à une puissance de consigne et renvoyer au tuner une valeur représentative du gain. Le module CPC applique au signal S numérisé une translation en fréquence pour corriger grossièrement le décalage en fréquence de la porteuse. A cet effet, le module CPC multiplie le signal numérisé par la fonction exp(j 2 π f t) pour faire subir au signal numérisé une translation de spectre d'une fréquence f qui est choisie proche d'un décalage de fréquence initial. Le signal translaté en fréquence en sortie du module CPC présente un décalage résiduel en fréquence relativement faible, typiquement de quelques kHz. Le signal translaté est fournit au module CHF. Le module CHF filtre et ré-échantillonne le signal translaté à un multiple de la fréquence de symbole du signal S, de manière à ne conserver qu'un certain nombre d'échantillons par symbole. Le filtre CHF permet notamment de supprimer le bruit en dehors du canal de transmission du signal reçu. Les entêtes HD du signal ré-échantillonné peuvent ainsi être décodées, de manière à permettre le décodage des données suivantes. Le signal ré-échantillonné est ainsi transmis au module PHP. Parallèlement le signal ré-échantillonné traverse la ligne à retard DLN pour retarder le signal le temps nécessaire au module PHP pour fournir des informations permettant de décoder les données du signal S. Le module CLF effectue un filtrage de valeurs de décalage de fréquence de porteuse mesurées par le module PHP et fournit une valeur filtrée au module CPC qui exploite cette valeur pour corriger la fréquence du signal. Les modules CPC, CHF, PHP et CLF forment ainsi une première boucle de correction de décalage en fréquence de porteuse.

Le module PHP exploite les blocs pilotes PL s'ils sont présents pour prédire l'évolution de la phase du signal rééchantillonné contenant les données à décoder. La phase de ce signal peut ainsi être par exemple obtenue par interpolation à partir de deux blocs pilotes PL successifs, ou pour le premier bloc de données d'une trame TR, à partir de l'entête HD et du premier bloc pilote de la trame. Le retard appliqué au signal par la ligne à retard DLN est donc supérieur au nombre de symboles entre deux blocs pilotes PL. Le module PHP reconstitue la phase du signal entre deux blocs pilotes PL en réalisant des mesures de phase sur ces derniers. A cet effet, le module PHP détermine la phase PH de chaque symbole pilote par exemple par corrélation entre des symboles pilotes connus et le signal. Le module PHP fournit une valeur de correction de la phase qui est traitée par le module CLP avant d'être fournie au module de correction fine de la phase FPC. Le module FPC corrige la phase des symboles de données issus de la ligne à retard DLN en fonction des valeurs de correction filtrées par le module CLP. Le module FPC est contrôlé par les mesures de phases réalisées par le module PHP pour corriger l'erreur résiduelle de phase et de fréquence du signal. Le module FPC fournit un signal de données corrigé en phase au module d'égalisation EQU permettant de corriger des distorsions harmoniques. Le module d'égalisation EQU comprend classiquement un égaliseur de type auto-adaptatif qui utilise les symboles connus ou estimés pour déterminer des coefficients d'égalisation. Le signal en sortie du module EQU est envoyé en sortie du démodulateur DMD et au module PDT qui effectue une mesure d'erreur de phase PHE qui est transmise au module CLP. La mesure d'erreur de phase PHE permet d'ajuster la phase de chaque symbole par rapport à la valeur filtrée FPH calculée par le module CLP. L'ensemble comprenant les modules FPC, PDT et CLP forme une boucle à verrouillage de phase PLL (Phase Lock Loop).

Pour s'affranchir de sévères distorsions harmoniques, le démodulateur DMD comprend dans un mode de réalisation un module de pré égalisation PEQ traitant le signal, et en particulier les entêtes HD et les blocs pilotes PL, avant qu'ils soient transmis au module PHP. Le module PEQ applique au signal un traitement d'égalisation proche de celui appliqué par le module d'égalisation EQU.

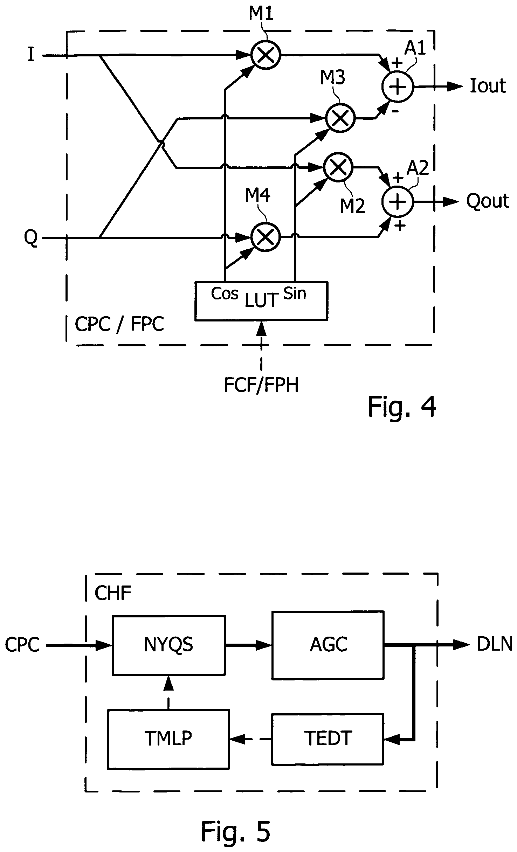

La figure 4 représente un mode de réalisation du module CPC ou FPC. Le module CPC ou FPC comprend deux multiplieurs M1, M2 recevant la composante I du signal fourni en entrée du module CPC / FPC et deux multiplieurs M3, M4 recevant la composante Q du signal d'entrée. Une autre entrée des multiplieurs M1-M4 reçoit une valeur respective provenant d'une table LUT de valeurs de sinus et de cosinus, sélectionnée en fonction d'une valeur d'erreur de phase PH fournie par le module CLF pour le module CPC ou par le module CLP pour le module FPC. Les sorties des multiplieurs M1 et M3 sont connectées à des entrées d'un additionneur A1, et les sorties des multiplieurs M2 et M4 sont connectées à des entrées d'un additionneur A2. L'additionneur A1 calcule la différence entre les signaux de sortie des multiplieurs M1 et M3. L'additionneur A2 calcule la somme des signaux de sortie des multiplieurs M2 et M4. Les sorties des additionneurs A1, A2 fournissent les composantes Iout et Qout du signal de sortie du module CPC ou FPC, décalées de la phase PH. En d'autres termes, les modules CPC et FPC calculent pour chaque symbole entrant Sn(I, Q) le symbole décalé SOn(Iout, Qout) obtenu par les formules suivantes :

$$\text{Iout} = \text{I}\cos \text{T(n)} - \text{Q}\sin \text{T(n)} \qquad (1)$$

$$\text{Qout} = \text{I}\sin \text{T(n)} + \text{Q}\cos \text{T(n)} \qquad (2)$$

avec T(n) = T(n-1) + Off, T(n-1) et T(n) étant les phases estimées de symboles consécutifs Sn-1 et Sn, et Off étant proportionnel au décalage de fréquence ou de phase fourni par le module CLF ou CLP.

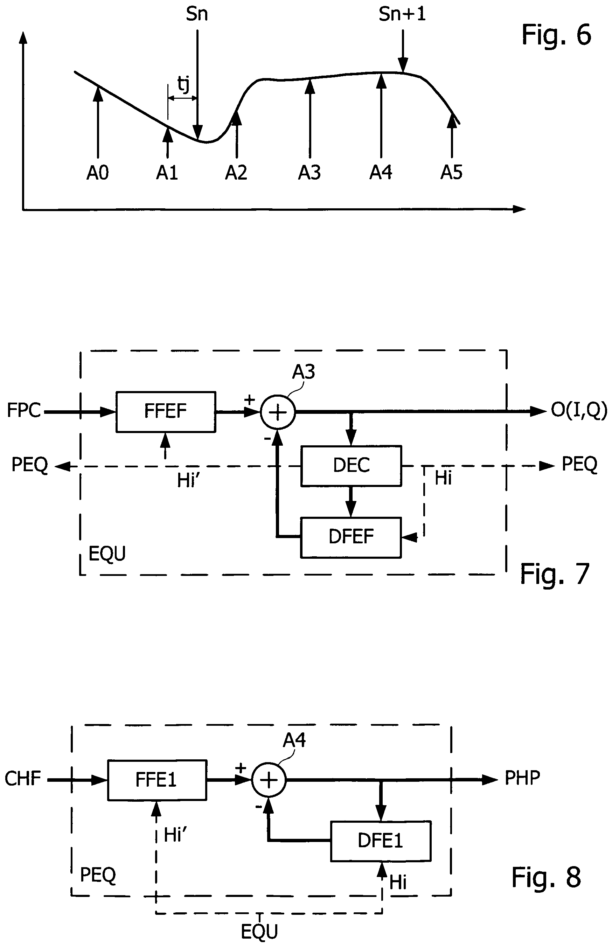

La figure 5 représente un mode de réalisation du module de filtrage de canal et de ré-échantillonnage CHF. Le module CHF comprend un filtre adapté NYQS, un module de contrôle de gain AGC, une boucle de synchronisation comprenant un module de mesure d'erreur de synchronisation TEDT et un filtre de boucle de synchronisation TMLP. Le filtre NYQS est "par exemple un filtre de Nyquist adapté, maximisant le rapport signal sur bruit. Le filtre NYQS peut être réalisé à partir d'un filtre de type à réponse impulsionnelle finie FIR (Finite Impulsional Response) dont les coefficients d'égalisation sont fixes et déterminés à partir de caractéristiques de transmission du signal S. Le filtre NYQS effectue une estimation du signal soit en même temps, soit avant le filtrage du signal en sortie du module CPC. Cette estimation consiste à déterminer la valeur du signal à un instant optimum d'un symbole en fonction d'échantillons voisins, soit par filtrage, soit par une interpolation d'ordre prédéfini. Le signal traité par le filtre NYQS est transmis au module AGC. Le module AGC peut comprendre un multiplieur dont le gain est commandé en fonction de la puissance de sortie requise du signal. La puissance du signal est comparée à une référence et le gain du multiplieur est augmenté ou diminué en fonction du résultat de la comparaison. Le module TEDT reçoit le signal en sortie du module AGC et évalue une erreur de synchronisation des symboles après changement de fréquence du signal ré-échantillonné à la fréquence symbole. L'erreur de synchronisation est moyennée par filtrage sur plusieurs centaines de symboles par le filtre de boucle TMLP. L'erreur filtrée est appliquée au filtre NYQS pour échantillonner les symboles à l'optimum de leur valeur. Le module TEDT comprend par exemple un oscillateur contrôlé numériquement DCO (Digitally Controlled Oscillator) qui peut être réalisé par un accumulateur modulo 1 qui accumule une valeur Fsymb/Fsamp du rapport de la fréquence estimée de symbole sur la fréquence d'échantillonnage. A chaque débordement apparaît un nouveau symbole et le contenu de l'accumulateur donne le temps tj indiqué sur la figure 6. La figure 6 représente la forme du signal en entrée du filtre NYQS. Des flèches vers le bas montrent des instants optimums des symboles Sn et Sn+1 dans le signal. Des flèches vers le haut montrent des instants d'échantillonnage A0, A1, A2, A3, A4, A5 du signal. Le temps ti représente l'écart entre l'instant optimum du symbole Sn dans le signal et l'instant d'échantillonnage précédent A1.

Le module PHP analyse le signal pour identifier les entêtes HD et les symboles pilotes PL. A cet effet, le module PHP cherche à décoder par corrélation chaque entête constituée d'une séquence de 90 symboles dont 26 sont connus et 64 codent 7 bits qui forment donc une combinaison parmi 128 combinaisons possibles. Compte tenu de la forte redondance de codage des informations de l'entête (7 bits codés avec 64 bits), il n'y a en principe pas d'erreur de décodage. Ce décodage permet d'évaluer une valeur de décalage en fréquence de porteuse et une phase de référence des symboles, qui sont fournis au module FPC. La valeur de décalage peut être préalablement filtrée sur plusieurs entêtes successives afin de diminuer l'influence du bruit sur les symboles. Le décodage des 7 bits d'informations contenues dans les entêtes fournit notamment la longueur de la trame TR qui suit et indiquant si la trame contient des symboles pilotes. Chaque entête initialise une base de temps permettant de prédire la position des données DT, des éventuels symboles pilotes PL et du prochain entête HD. Le module PHP traite également les blocs pilotes PL comprenant 36 symboles en mesurant leur phase par corrélation du signal avec un bloc de pilotes connu. L'intervalle entre les blocs pilotes est de 1440 symboles de données. Pendant cet intervalle de temps, le bruit de phase peut provoquer une rotation du signal de quelques degrés qui peut être partiellement corrigée grâce aux symboles pilotes. Par exemple une simple interpolation linéaire entre deux blocs pilotes PL permet d'obtenir une phase de référence pour le décodage des symboles de données. La pente entre deux blocs de symboles PL correspond à une valeur résiduelle du décalage de fréquence. Pour effectuer une telle interpolation, il est nécessaire d'attendre le bloc pilote suivant. C'est pourquoi la ligne à retard DLN retarde le signal d'au moins 1440+36 symboles dans le cas d'un signal DVB-S2.

Dans un mode de réalisation, le module d'égalisation EQU comprend un filtre de type à réponse impulsionnelle finie FIR (Finite Impulsional Response) auto-adaptatif, c'est-à-dire dont les coefficients d'égalisation sont calculés et affinés en fonction du signal à traiter. Le module de pré égalisation PEQ comprend également un filtre de type FIR recevant les coefficients d'égalisation du filtre du module EQU. Le module PEQ assure une égalisation relativement précise des entêtes et des pilotes en supprimant systématiquement le bruit généré par la distorsion harmonique. Il permet donc également de réduire le bruit de phase résiduel sur le signal de données, et de réduire le risque de mauvais décodage d'une entête qui entraînerait une perte totale d'une trame TR. Il est à noter que la présence du module PEQ n'entraîne aucun risque d'instabilité et n'affecte pas l'indépendance totale des différentes boucles du démodulateur DMD.

Les figures 7 et 8 représentent un autre mode de réalisation des modules d'égalisation EQU et PEQ. Sur la figure 7, le module d'égalisation comprend un égaliseur de type FFE (Feed-Forward Equalizer) comprenant un filtre de type FIR FFEF connecté en série avec un égaliseur de type DFE (Décision Feed-back Equalizer) comprenant un filtre de type FIR DFEF, un additionneur A3 et un module de décision DEC. Les filtres FFEF et DFEF sont connectés à une entrée respective de l'additionneur A3 qui retranche du signal de sortie du filtre FFEF le signal de sortie du filtre DFEF. La sortie de l'additionneur A3 qui constitue la sortie du module EQU est connectée au module DEC qui évalue les coefficients d'égalisation Hi, Hi' des filtres de type FIR FFEF et DFEF afin de minimiser les erreurs. Le module DEC est connecté en entrée du filtre DFEF. Le filtre DFEF estime l'écho dans le signal d'entrée du module EQU en modélisant le canal de transmission du signal par un filtre de type FIR. Le filtre FFEF permet de corriger ce qui n'est pas modélisé par l'égaliseur DFE, et notamment le retard de groupe (group delay). En effet, la réponse en phase d'un filtre dépend en général de la fréquence. Si cette phase varie linéairement en fonction de la fréquence, le filtre est dit "à phase linéaire". Les composantes d'un signal passant dans ce filtre seront retardées d'une même valeur, appelée "retard de groupe", définie comme la dérivée de la phase en fonction de la pulsation. Toutefois, le signal à traiter présente généralement une distorsion de phase, et le retard de groupe n'est pas le même à toutes les fréquences. En transmission par satellite par exemple, il y a plus de retard au bord de la bande qu'au milieu. Cette distorsion peut être corrigée par un filtre à gain constant dans la bande utile, tel qu'un filtre de type FIR qui corrige la phase du signal. Le filtre FFEF permet ainsi de corriger cette distorsion, ainsi que d'autres distorsions, par exemple d'amplitude, qui peuvent être présentes dans le signal à traiter.

Sur la figure 8, le module PEQ comprend alors un égaliseur de type FFE comprenant un filtre de type FIR FFE1 dont les coefficients d'égalisation Hi' sont ceux du filtre FFEF, connecté en série avec un égaliseur de type DFE sans module de décision comprenant un filtre FIR DFE1 dont les coefficients d'égalisation Hi sont dérivés de ceux du filtre DFEF et un additionneur A4 qui retranche du signal de sortie du filtre FFE1, le signal de sortie du filtre DFE1. La sortie de l'additionneur A4 qui constitue la sortie du module PEQ est connectée à l'entrée du filtre DFE1.

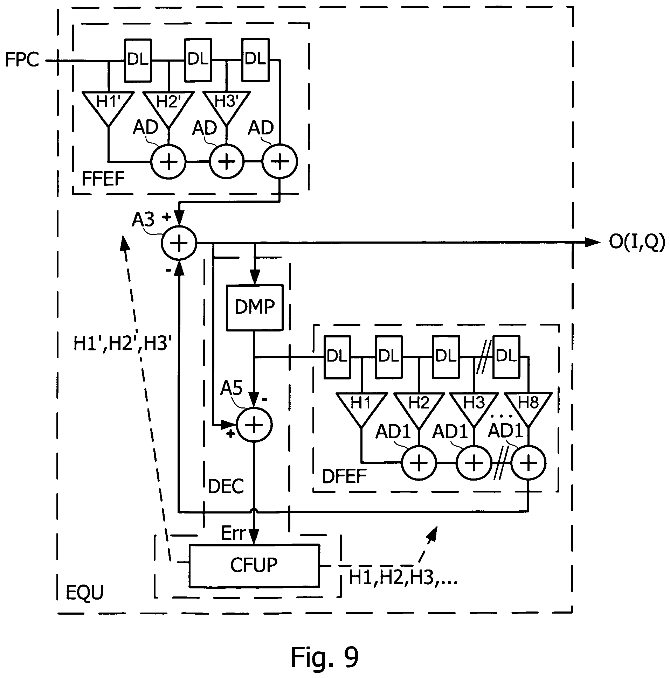

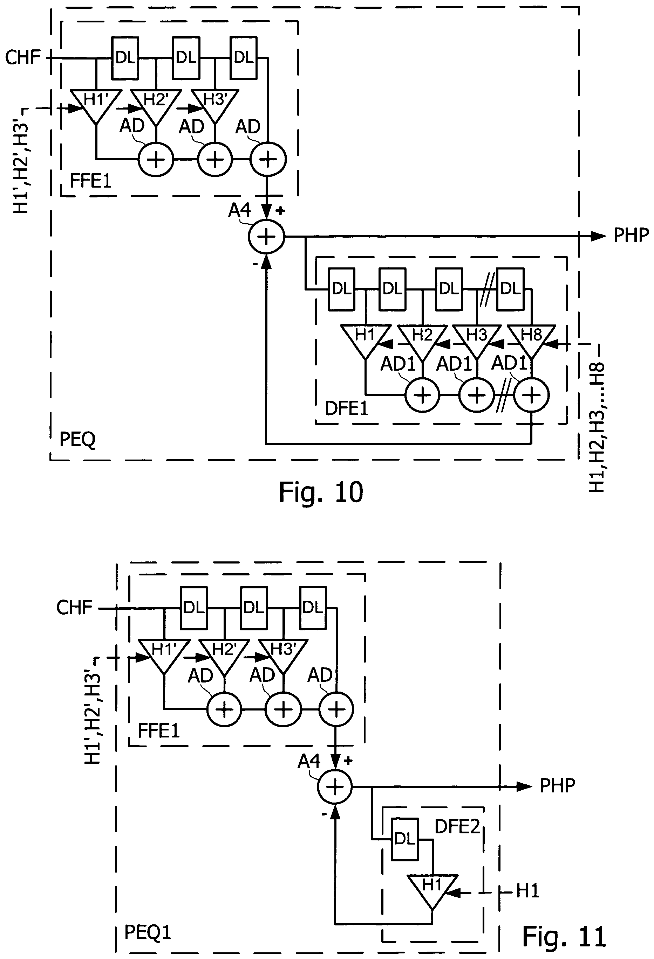

Les figures 9 et 10 représentent un mode de réalisation plus détaillé des modules d'égalisation EQU et PEQ. Sur la figure 9, le filtre FFEF est un filtre à quatre coefficients d'égalisation H1', H2', H3' et 1 et comprend quatre étages séparés par une ligne à retard DL d'une période de symbole, à savoir trois premiers étages comprenant un multiplieur de coefficient d'égalisation H1', H2', H3', et un dernier étage constitué par une simple liaison électrique. Le filtre FFEF comprend trois additionneurs AD connectés en cascade, les entrées d'un premier additionneur AD étant connectées aux sortie des multiplieurs H1', H2', les autres entrées des deux autres additionneurs AD étant connectées à la sortie du multiplieur H3' et à la sortie de la ligne à retard DL du dernier étage. La sortie d'un dernier additionneur AD est connectée à l'additionneur A3. Le filtre DFEF est un filtre à huit coefficients d'égalisation H1, H2, H3 ... H8 et comprend ainsi huit étages interconnectés par des additionneurs AD1 connectés en cascade. Chaque étage comprend une ligne à retard DL d'une période de symbole en parallèle avec un multiplieur de coefficient d'égalisation H1-H8. Les entrées du premier additionneur AD1 sont connectées aux sorties des multiplieurs par les coefficients H1 et H2, et une entrée de chacun des additionneurs AD1 est connectées à la sortie des multiplieurs par les coefficients H3-H8. La sortie d'un dernier additionneur AD1 du filtre DFEF est connectée à une entrée inverseuse de l'additionneur A3. Le module de décision DEC comprend un module de démappage DMP, un additionneur A5 et un module de calcul de coefficients CFUP. Le module DMP est connecté en entrée à la sortie de l'additionneur A3 et en sortie à la ligne à retard DL d'un premier étage du filtre DFEF et à une entrée inverseuse de l'additionneur A5. Une entrée directe de l'additionneur A5 est connectée à la sortie de l'additionneur A3. La sortie de l'additionneur A5 fournit une valeur d'erreur Err entre le signal de sortie du module EQU et le signal de sortie du module DMP. La valeur d'erreur Err est fournie en entrée du module CFUP qui calcule des valeurs ajustées des coefficients d'égalisation H1'-H3' et H1-H8 en fonction de la valeur d'erreur Err. Le module DMP prend une décision sur chaque échantillon, en remplaçant chaque échantillon (I,Q) reçu par un point (Id,Qd) le plus proche de la constellation de modulation attendue, telle que spécifiée dans l'entête HD. Par exemple en modulation QPSK,

$$Id \; = \; \frac{a\sqrt{2}}{2} \cdot \text{sign(I)}, \qquad\qquad (3)$$

et

$$Qd \; = \; \frac{a\sqrt{2}}{2} \cdot \text{sign(Q)}, \qquad\qquad (4)$$

a étant le rayon de la constellation, et sign(x) étant une fonction donnant le signe de x.

Sur la figure 10, les filtres FFE1 et DFE1 du module PEQ sont identiques aux filtres FFEF et DFEF du module EQU. Les sorties des filtres FFE1 et DFE1 sont connectées à des entrées respective de l'additionneur A4 qui retranche le signal de sortie du filtre DFE1 du signal de sortie du filtre FFE1. La sortie de l'additionneur A4 est connectée à la sortie du module PEQ.

Le comportement de l'égaliseur DFE comprenant le filtre DFEF ou DFE1 et l'additionneur A3 ou A4 est décrit par les équations en symbolique suivantes :

$$y \; = \; x \; - \; z^{-1}\hat{y} \cdot \text{H(z)} \qquad\qquad (5)$$

où y est un symbole de sortie du filtre, x est un symbole d'entrée du filtre, H(z) est la fonction de transfert du filtre DFEF ou DFE1, $\hat{y}$ = y - e est le symbole estimé et e l'erreur résiduelle, normalement constituée de bruit gaussien blanc lorsque l'égaliseur a convergé. Il en résulte finalement que :

$$y = \frac{x}{1 + H(z) \cdot z^{-1}} + e\frac{H(z) \cdot z^{-1}}{1 + H(z) \cdot z^{-1}} \qquad (6)$$

La fonction de transfert H du filtre DFEF ou DFE1 présente la forme suivante :

$$H(z) = H1 + H2 \cdot z^{-1} + H3 \cdot z^{-2} + \Lambda + H8 \cdot z^{-7} \qquad (7)$$

Les coefficients d'égalisation H1-H8 du filtre sont généralement faibles (rarement supérieurs à 0,2). Dans une approximation du premier ordre l'erreur résiduelle e peut être négligée. Par ailleurs, si les coefficients H2, H3, ... sont petits devant 1, comme c'est le cas en pratique, seul le coefficient H1 peut être conservé dans le filtre DFE1. La fonction de transfert de l'égaliseur DFE comprenant le filtre DFE1 et l'additionneur A4 peut donc être approximée de la manière suivante :

$$H(z) = \frac{1}{1 + H1 \cdot z^{-1}} \qquad (8)$$

La figure 11 représente un autre mode de réalisation du module de pré égalisation. Sur la figure 11, le module de pré égalisation PEQ1 diffère du module PEQ représenté sur la figure 10 en ce que le filtre DFE1 est remplacé par un filtre simplifié DFE2 présentant la fonction de transfert donnée la formule (8). Ainsi, le filtre DFE2 comprend une ligne à retard DL d'une période de symbole connectée en entrée à la sortie de l'additionneur A4 et en sortie à un multiplieur de coefficient H1, la sortie du multiplieur étant connectée à l'entrée inverseuse de l'additionneur A4. Le filtre DFE2 forme ainsi un filtre IIR (Infinite Impulsional Response filter) à un seul coefficient H1.

La fraction de la formule (8) peut être remplacée par un développement limité du premier ordre de cette fraction, de sorte que la fonction de transfert H(z) de l'égaliseur DFE est approximée par la fonction de transfert de filtre FIR suivante :

$$H(z) = 1 - H1 \cdot z^{-1} \qquad (9)$$

Les coefficients d'égalisation du filtre FIR approximant l'égaliseur DFE sont donc 1 et -H1.

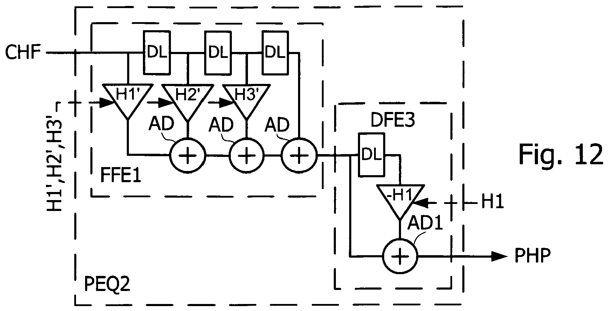

La figure 12 représente un autre mode de réalisation du module de pré égalisation. Sur la figure 12, le module de pré égalisation PEQ2 diffère du module PEQ1 représenté sur la figure 11 en ce que le filtre DFE2 a été remplacé par un filtre DFE3 et l'additionneur A4 a été supprimé, le filtre DFE3 étant en série avec l'égaliseur FFE1. Le filtre DFE3 comprend une ligne à retard DL et un additionneur AD. La ligne à retard DL et l'additionneur AD du filtre DFE3 sont connectés en entrée à la sortie du filtre FFE1, la sortie de la ligne à retard DL étant connectée à une autre entrée de l'additionneur AD1. La sortie de l'additionneur AD1 est connectée à la sortie du module PEQ2. Ainsi, le filtre DFE3 présente la fonction de transfert simplifiée donnée par la formule (9).

Dans un autre mode de réalisation, le filtre FFE1 du module PEQ1 ou PEQ2 correspondant au filtre FFEF du module EQU ne comporte que les étages significatifs du filtre FFEF. Ainsi, si le filtre FFEF comporte 5 étages, le filtre FIR du module PEQ1 ou PEQ2 peut ne comporter que les 3 étages principaux du filtre FFEF, les coefficients d'égalisation des étages étant de plus en plus faibles à partir de l'étage principal.

Au début d'une recherche de canal, les coefficients d'égalisation du module EQU sont généralement nuls, sauf dans le filtre FFEF ne comportant qu'un étage dont le coefficient est non nul (égal à 1). Un premier décodage des données transmises est effectué avec des données non égalisées. Une fois que la fréquence de porteuse estimée est proche de la fréquence de porteuse réelle, le module EQU commence à converger et l'estimation des symboles pilotes PL devient de plus en plus précise. Il est à noter qu'il n'y a pas de risque d'instabilité puisque les branches de traitement des symboles pilotes et des symboles de données sont découplées.

Il apparaîtra clairement à l'homme de l'art que la présente invention est susceptible de diverses variantes de réalisation et diverses applications. En particulier, l'invention peut être appliquée à d'autres formes de signaux que les signaux DVB-S2, et en particulier à tous les signaux transmis sous la forme de trames de symboles avec des symboles pilotes permettant d'estimer la fréquence et la phase du signal.

L'invention n'est pas non plus limitée à un traitement de signaux préalablement numérisés, tous les traitements décrits appliqués au signal à démodulé pouvant être effectués en analogique.

L'invention n'est pas non plus limitée à un traitement d'interpolation entre les phases estimées de deux blocs pilotes consécutifs pour estimer l'évolution de la phase entre deux symboles pilotes. En effet, l'invention ne s'applique pas nécessairement à un signal fortement perturbé, et l'estimation de la phase d'un ou plusieurs symboles pilotes peut être suffisante pour estimer la phase du signal. Il peut alors ne pas être nécessaire de prévoir une ligne à retard pour retarder le signal suffisamment pour pouvoir exploiter deux blocs pilotes successifs avant de pouvoir traiter le signal entre les deux blocs pilotes. De même, il peut ne pas être nécessaire de prévoir un module de détection d'erreur de phase en sortie de l'égaliseur pour ajuster finement la phase.

**Revendications**

1.  Procédé de démodulation d'un signal (S) modulé, comprenant des étapes consistant à :

    recevoir un signal (S) modulé en n-PSK ou n-APSK comprenant une succession de symboles organisés en trames (TR) comportant chacune une entête (HD) suivie de blocs de symboles de données (DT) séparés par des blocs de symboles pilotes (PL),
    appliquer au signal (S) reçu une correction en fréquence et filtrer le signal corrigé en fréquence pour supprimer du bruit en dehors d'un canal de transmission du signal,
    déterminer la phase des entêtes (HD) et des blocs pilotes (PL) pour prédire l'évolution de la phase du signal (S),
    corriger la phase des symboles de données (DT) en fonction de l'évolution de la phase du signal (S), et
    égaliser les symboles de données corrigés en phase utilisant des coefficients d'égalisation (Hi, Hi') évalués à l'aide de symboles estimés ou connus (HD, PL, DT) du signal,
    **caractérisé en ce qu'**il comprend une étape de pré égalisation des symboles d'entête (HD), pilotes (PL) et de données (DT), effectuée avant la détermination de la phase des entêtes et des blocs pilotes, et utilisant les coefficients d'égalisation (Hi, Hi') évalués pour l'égalisation des symboles de données.

2.  Procédé selon la revendication 1, dans lequel la phase d'un symbole de données (DT) est ajustée en fonction d'une phase déterminée par interpolation entre des phases déterminées pour des blocs pilotes (PL) précédent et suivant le symbole de données.

3.  Procédé selon la revendication 2, comprenant des étapes de mesure d'un décalage de fréquence de porteuse et de correction du signal en fonction du décalage de fréquence de porteuse.

4.  Procédé selon l'une des revendications 1 à 3, dans lequel l'égalisation et la pré égalisation sont effectuées avec des filtres de type FIR (FFEF, FFE1, DFEF, DFE1) utilisant au moins en partie les mêmes coefficients d'égalisation (Hi', Hi) calculés pour le filtre d'égalisation.

5.  Procédé selon l'une des revendications 1 à 4, dans lequel l'égalisation et la pré égalisation sont chacune effectuées à l'aide d'un égaliseur de type FFE (FFEF, FFE1) connecté en série avec un filtre de type DFE (DFEF, DFE1).

6.  Procédé selon l'une des revendications 1 à 3, dans lequel l'égalisation et la pré égalisation sont effectuées avec de filtres de type FIR, le ou les filtres FIR de la pré égalisation utilisant uniquement des coefficients d'égalisation (Hi, Hi') significatifs utilisés pour l'égalisation.

7.  Procédé selon l'une des revendications 1 à 3, dans lequel l'égalisation est effectuée à l'aide d'un premier filtre de type FIR (FFEF, FFE1) et d'un second filtre de type FIR (DFEF) connectés à l'entrée d'un additionneur (A3), la pré égalisation étant effectuée à l'aide d'un troisième filtre de type FIR (FFE1) utilisant les mêmes coefficients d'égalisation (Hi') que le premier filtre de type FIR, et un filtre de type IIR à un étage (DFE2) utilisant un coefficient d'égalisation principal (H1) du second filtre de type FIR , le troisième filtre de type FIR et le filtre de type IIR étant connectés à l'entrée d'un additionneur (A4).

8.  Procédé selon l'une des revendications 1 à 3, dans lequel l'égalisation est effectuée à l'aide d'un premier filtre de type FIR (FFEF, FFE1) et d'un second filtre de type FIR (DFEF) connectés à l'entrée d'un additionneur (A3), la pré égalisation étant effectuée à l'aide d'un troisième filtre de type FIR (FFE1) utilisant les mêmes coefficients d'égalisation (Hi') que le premier filtre de type FIR, connecté en série avec un quatrième filtre de type FIR à un étage (DFE3) utilisant un coefficient d'égalisation principal inversé (-H1) du second filtre de type FIR.

9. Procédé selon l'une des revendications 1 à 8, comprenant une étape de remplacement de chaque symbole de données dans le signal reçu par un symbole dont l'amplitude et la phase correspondent à celles d'un point de constellation de modulation le plus proche d'un point ayant l'amplitude et la phase du symbole de données.

10. Démodulateur d'un signal (S) modulé en n-PSK ou n-APSK comprenant une succession de symboles organisés en trames (TR) comportant chacune une entête (HD) suivie de blocs de symboles de données (DT) séparés par des blocs de symboles pilotes (PL), **caractérisé en ce qu'**il est configuré pour mettre en oeuvre le procédé selon l'une des revendications 1 à 9, le démodulateur comprenant
des premiers moyens pour appliquer au signal (S) reçu une correction en fréquence et filtrer le signal corrigé en fréquence pour supprimer du bruit en dehors d'un canal de transmission du signal (S),
des deuxièmes moyens pour déterminer la phase des entêtes et des blocs pilotes pour prédire l'évolution de la phase du signal,
des troisièmes moyens pour corriger la phase des symboles de données (DT) en fonction de l'évolution de la phase du signal (S),
un égaliseur (EQU) pour égaliser des symboles de données du signal reçu corrigés en phase, **caractérisé en ce qu'**il utilise des coefficients d'égalisation (Hi, Hi') évalués à l'aide de symboles estimés ou connus (HD, PL, DT) du signal, un pré égaliseur (PEQ) pour égaliser les symboles d'entête et pilotes (HD, PL) avant qu'ils soient corrigés en phase, en utilisant les coefficients d'égalisation (Hi, Hi') évalués par l'égaliseur.

11. Démodulateur selon la revendication 10, comprenant une boucle de correction de décalage en fréquence de porteuse, configurée pour mesurer un décalage en fréquence de porteuse, et corriger le signal à démoduler en fonction de mesures de décalage en fréquence de porteuse.

12. Démodulateur selon la revendication 10 ou 11, comprenant une boucle à verrouillage de phase configurée pour déterminer une phase de chaque symbole de données reçu à partir de phases mesurées de symboles pilotes transmis avant et après le symbole de données, et pour appliquer un déphasage au symbole de données en fonction de la phase déterminée.

13. Démodulateur selon l'une des revendications 10 à 12, dans lequel l'égaliseur (EQU) et le pré égaliseur (PEQ) comprennent des filtres de type FIR (FFEF, FFE1, DFEF, DFE1) utilisant au moins en partie les mêmes coefficients d'égalisation (Hi', Hi) calculés pour l'égaliseur.

14. Démodulateur selon l'une des revendications 10 à 13, dans lequel l'égaliseur (EQU) comprend un égaliseur de type FFE (FFEF) connecté en série avec un filtre de type DFE (DFEF), l'égaliseur de type DFE comprenant un circuit de calcul (DEC) de coefficients d'égalisation (Hi, Hi') des égaliseurs de type FFE et DFE, le pré égaliseur (PEQ) comprenant un filtre de type FFE (FFE1) et un filtre de type DFE (DFE1) connectés à l'entrée d'un additionneur (A4), et pouvant utiliser uniquement des coefficients d'égalisation significatifs utilisés par l'égaliseur (EQU).

15. Démodulateur selon l'une des revendications 10 à 14, dans lequel l'égaliseur (EQU) comprend un filtre de type FFE (FFEF) et un filtre de type FIR (DFEF) connectés à l'entrée d'un additionneur (A3), et un circuit de calcul (DEC) des coefficients d'égalisation (Hi, Hi') des filtres de type FFE et FIR, le pré égaliseur (PEQ1) comprenant un filtre de type FFE (FFE1) utilisant les mêmes coefficients d'égalisation (Hi') que le filtre de type FFE de l'égaliseur (EQU), et un filtre de type IIR à un étage (DFE2) utilisant un coefficient d'égalisation principal (H1) du filtre de type FIR de l'égaliseur, le filtre de type FFE de pré égalisation et le filtre de type IIR étant connectés à l'entrée d'un additionneur (A4).

16. Démodulateur selon l'une des revendications 10 à 14, dans lequel l'égaliseur (EQU) comprend un filtre de type FFE (FFEF) et un filtre de type FIR (DFEF) connectés à l'entrée d'un additionneur (A3), et un circuit de calcul (DEC) des coefficients d'égalisation (Hi, Hi') des filtres de type FFE et DFE, le pré égaliseur (PEQ2) comprenant un filtre de type FFE (FFE1) utilisant les mêmes coefficients correction (Hi') que le filtre de type FFE de l'égaliseur (EQU), en série avec un filtre de type FIR à un étage (DFE3) utilisant un coefficient d'égalisation principal inversé (-H1) du filtre de type FIR de l'égaliseur.

17. Démodulateur selon l'une des revendications 10 à 16, dans lequel l'égaliseur (EQU) est configuré pour remplacer chaque symbole de données (DT) dans le signal reçu par un symbole dont l'amplitude et la phase correspondent à celles d'un point de constellation de modulation le plus proche d'un point ayant l'amplitude et la phase du symbole de données.

**Patentansprüche**

1. Verfahren zur Demodulation eines modulierten Signals (S), umfassend die folgenden Schritte, darin bestehend:

   ein n-PSK- oder n-APSK-moduliertes Signal (S) zu empfangen, umfassend eine Aufeinanderfolge von in Rastern (TR) organisierten Symbolen, jeweils umfassend einen Vorsatz (HD), gefolgt von Datensymbolblöcken (DT), die durch Steuersymbolblöcke (PL) getrennt sind,
   an dem empfangenen Signal (S) eine Frequenzkorrektur anzuwenden und das frequenzkorrigierte Signal zu filtern, um Lärm außerhalb eines Übertragungskanals des Signals zu unterdrücken,
   die Phase der Vorsätze (HD) und der Steuerblöcke (PL) zu bestimmen, um die Entwicklung der Phase des Signals (S) vorherzusagen,
   die Phase der Datensymbole (DT) in Abhängigkeit von der Entwicklung der Phase des Signals (S) zu korrigieren, und
   die phasenkorrigierten Datensymbole, die Entzerrungskoeffizienten (Hi, Hi') verwenden, die mit Hilfe von geschätzten oder bekannten Symbolen (HD, PL, DT) evaluiert werden, zu entzerren,
   **dadurch gekennzeichnet, dass** es einen Schritt der Vor-Entzerrung der Kopf- (HD), Steuer- (PL) und Datensymbole (DT) umfasst, die vor der Bestimmung der Phase der Vorsätze und der Steuerblöcke durchgeführt wird, wobei die evaluierten Entzerrungskoeffizienten (Hi, Hi') für die Entzerrung der Datensymbole verwendet werden.

2. Verfahren nach Anspruch 1, bei dem die Phase eines Datensymbols (DT) in Abhängigkeit von einer Phase, bestimmt durch Interpolation zwischen bestimmten Phasen für Steuerblöcke (PL) vor und nach dem Datensymbol, angepasst wird.

3. Verfahren nach Anspruch 2, umfassend Schritte zum Messen eines Versatzes einer Träger- und Korrekturfrequenz des Signals in Abhängigkeit vom Trägerfrequenzversatz.

4. Verfahren nach einem der Ansprüche 1 bis 3, bei dem die Entzerrung und die Vor-Entzerrung mit Filtern vom Typ FIR (FFEF, FFE1, DFEF, DFE1) durchgeführt werden, wobei zumindest teilweise dieselben Entzerrungskoeffizienten (Hi', Hi) verwendet werden, die für den Entzerrungsfilter berechnet wurden.

5. Verfahren nach einem der Ansprüche 1 bis 4, bei dem die Entzerrung und die Vor-Entzerrung jeweils mit Hilfe eines Entzerrers vom Typ FFE (FFEF, FFE1) durchgeführt werden, der in Serie mit einem Filter vom Typ DFE (DFEF, DFE1) angeschlossen ist.

6. Verfahren nach einem der Ansprüche 1 bis 3, bei dem die Entzerrung und die Vor-Entzerrung mit Filtern vom Typ FIR durchgeführt werden, wobei der oder die Filter FIR der Vor-Entzerrung nur signifikante Entzerrungskoeffizienten (Hi, Hi') verwenden, die für die Entzerrung verwendet werden.

7. Verfahren nach einem der Ansprüche 1 bis 3, bei dem die Entzerrung mit Hilfe eines ersten Filters vom Typ FIR (FFEF, FFE1) und eines zweiten Filters vom Typ FIR (DFEF), die an den Eingang eines Addierers (A3) angeschlossen sind, erfolgt, wobei die Vor-Entzerrung mit Hilfe eines dritten Filters vom Typ FIR (FFE1), der dieselben Entzerrungskoeffizienten (Hi') wie der erste Filter vom Typ FIR verwendet, und eines Filters vom Typ IIR mit einer Stufe (DFE2) durchgeführt wird, der einen Hauptentzerrungskoeffizienten (H1) des zweiten Filters vom Typ FIR verwendet, wobei der dritte Filter vom Typ FIR und der Filter vom Typ IIR an den Eingang eines Addierers (A4) angeschlossen sind.

8. Verfahren nach einem der Ansprüche 1 bis 3, bei dem die Entzerrung mit Hilfe eines ersten Filters vom Typ FIR (FFEF, FFE1) und eines zweiten Filters vom Typ FIR (DFEF), die an den Eingang eines Addierers (A3) angeschlossen sind, erfolgt, wobei die Vor-Entzerrung mit Hilfe eines dritten Filters vom Typ FIR (FFE1), der dieselben Entzerrungskoeffizienten (Hi') wie der erste Filter vom Typ FIR verwendet, der mit einem vierten Filter vom Typ FIR mit einer Stufe (DFE3) in Serie geschaltet ist, der einen umgekehrten Hauptentzerrungskoeffizienten (-H1) des zweiten Filters vom Typ FIR verwendet.

**9.** Verfahren nach einem der Ansprüche 1 bis 8, umfassend einen Schritt des Ersetzens jedes Datensymbols in dem empfangenen Signal durch ein Symbol, dessen Amplitude und Phase jenen eines Punktes einer Modulationskonstellation, der einem Punkt mit der Amplitude und der Phase des Datensymbols am nächsten ist, entsprechen.

**10.** Demodulator eines n-PSK- oder n-APSK-modulierten Signals (S), umfassend eine Aufeinanderfolge von in Rastern (TR) organisierten Symbolen, jeweils umfassend einen Vorsatz (HD), gefolgt von Datenblöcken (DT), die durch Steuersymbolblöcke (PL) getrennt sind, **dadurch gekennzeichnet, dass** er konfiguriert ist, um das Verfahren nach einem der Ansprüche 1 bis 9 einzusetzen, wobei der Demodulator umfasst:

erste Mittel, um an dem empfangenen Signal (S) eine Frequenzkorrektur anzuwenden, und das frequenzkorrigierte Signal zu filtern, um Lärm außerhalb eines Übertragungskanals des Signals (S) zu unterdrücken,
zweite Mittel, um die Phase der Vorsätze und der Steuerblöcke zu bestimmen, um die Entwicklung der Phase des Signals vorherzusagen,
dritte Mittel, um die Phase der Datensymbole (DT) in Abhängigkeit von der Entwicklung der Phase des Signals (S) zu korrigieren,
einen Entzerrer (EQU), um Datensymbole des empfangenen Signals, die phasenkorrigiert sind, zu entzerren, **dadurch gekennzeichnet, dass** er Entzerrungskoeffizienten (Hi, Hi') verwendet, die mit Hilfe von geschätzten oder bekannten Symbolen (HD, PL, DT) des Signals evaluiert werden, einen Vor-Entzerrer (PEQ), um die Kopf- und Steuersymbole (HD, PL) zu entzerren, bevor sie phasenkorrigiert werden, wobei die Entzerrungskoeffizienten (Hi, Hi'), die vom Entzerrer evaluiert wurden, verwendet werden.

**11.** Demodulator nach Anspruch 10, umfassend eine Korrekturschleife eines Trägerfrequenzversatzes, die konfiguriert ist, um einen Trägerfrequenzversatz zu messen und das zu demodulierende Signal in Abhängigkeit von Messungen eines Trägerfrequenzversatzes zu korrigieren.

**12.** Demodulator nach Anspruch 10 oder 11, umfassend eine Phasenverriegelungsschleife, die konfiguriert ist, um eine Phase jedes empfangenen Datensymbols aus gemessenen Phasen von Steuersymbolen, die vor und nach dem Datensymbol übertragen werden, zu bestimmen, und um einen Phasenversatz an dem Datensymbol in Abhängigkeit von der bestimmten Phase anzuwenden.

**13.** Demodulator nach einem der Ansprüche 10 bis 12, bei dem der Entzerrer (EQU) und der Vor-Entzerrer (PEQ) Filter vom Typ FIR (FFEF, FFE1, DFEF, DFE1) umfassen, die zumindest teilweise dieselben Entzerrungskoeffizienten (Hi', Hi), die für den Entzerrer berechnet wurden, verwenden.

**14.** Demodulator nach einem der Ansprüche 10 bis 13, bei dem der Entzerrer (EQU) einen Entzerrer vom Typ FFE (FFEF) umfasst, der in Serie mit einem Filter vom Typ DFE (DFEF) geschaltet ist, wobei der Entzerrer vom Typ DFE eine Rechenschaltung (DEC) von Entzerrungskoeffizienten (Hi, Hi') der Entzerrer vom FFE und DFE umfasst, und wobei der Vor-Entzerrer (PEQ) einen Filter vom Typ FFE (FFE1) und einen Filter vom Typ DFE (DFE1) umfasst, die an den Eingang eines Addierers (A4) angeschlossen sind und nur signifikante Entzerrungskoeffizienten verwenden können, die vom Entzerrer (EQU) verwendet werden.

**15.** Demodulator nach einem der Ansprüche 10 bis 14, bei dem der Entzerrer (EQU) einen Filter vom Typ FFE (FFEF) und einen Filter vom Typ FIR (DFEF), die an den Eingang eines Addierers (A3) angeschlossen sind, und eine Rechenschaltung (DEC) der Entzerrungskoeffizienten (Hi, Hi') der Filter vom Typ FFE und FIR umfasst, wobei der Vor-Entzerrer (PEQ1) einen Filter vom Typ FFE (FFE1), der dieselben Entzerrungskoeffizienten (Hi') wie der Filter vom Typ FFE des Entzerrers (EQU) verwendet, und einen Filter vom Typ IIR mit einer Stufe (DFE2) umfasst, der einen Hauptentzerrungskoeffizienten (H1) des Filters vom Typ FIR des Entzerrers verwendet, wobei der Filter vom Typ FFE zur Vor-Entzerrung und der Filter vom Typ IIR an den Eingang eines Addierers (A4) angeschlossen sind.

**16.** Demodulator nach einem der Ansprüche 10 bis 14, bei dem der Entzerrer (EQU) einen Filter vom Typ FFE (FFEF) und einen Filter vom Typ FIR (DFEF), die an den Eingang eines Addierers (A3) angeschlossen sind, und eine Rechenschaltung (DEC) der Entzerrungskoeffizienten (Hi, Hi') der Filter vom Typ FFE und DFE umfasst, wobei der Vor-Entzerrer (PEQ2) einen Filter vom Typ FFE (FFE1), der dieselben Entzerrungskoeffizienten (Hi') wie der Filter vom Typ FFE des Entzerrers (EQU) verwendet, in Serie mit einem Filter vom Typ FIR mit einer Stufe (DFE3) umfasst, der einen umgekehrten Hauptentzerrungskoeffizienten (-H1) des Filters vom Typ FIR des Entzerrers verwendet.

**17.** Demodulator nach einem der Ansprüche 10 bis 16, bei dem der Entzerrer (EQU) konfiguriert ist, um jedes Datensymbol (DT) in dem empfangenen Signal durch ein Symbol zu ersetzen, dessen Amplitude und Phase jenen eines Punktes einer Modulationskonstellation, der einem Punkt mit der Amplitude und Phase des Datensymbols am nächsten ist, entsprechen.

**Claims**

1. Method of demodulating a modulated signal (S), comprising steps consisting in:

   receiving an n-PSK or n-APSK modulated signal (S) comprising a succession of symbols organized into frames (TR) each comprising a header (HD) followed by blocks of data symbols (DT) separated by blocks of pilot symbols (PL),
   applying a frequency correction to the received signal (S) and filtering the frequency-corrected signal so as to suppress the noise outside of a transmission channel of the signal,
   determining the phase of the headers (HD) and of the pilot blocks (PL) so as to predict the evolution of the phase of the signal (S),
   correcting the phase of the data symbols (DT) as a function of the evolution of the phase of the signal (S), and equalizing the phase-corrected data symbols using equalization coefficients (Hi, Hi') evaluated with the aid of estimated or known symbols (HD, PL, DT) of the signal,
   **characterized in that** it comprises a step of pre equalization of the header symbols (HD), pilot symbols (PL) and data symbols (DT), performed before the determination of the phase of the headers and pilot blocks, and using the equalization coefficients (Hi, Hi') evaluated for the equalization of the data symbols.

2. Method according to Claim 1, in which the phase of a data symbol (DT) is adjusted as a function of a phase determined by interpolation between phases determined for pilot blocks (PL) preceding and following the data symbol.

3. Method according to Claim 2, comprising steps of measuring a carrier frequency shift and of correcting the signal as a function of the carrier frequency shift.

4. Method according to one of Claims 1 to 3, in which the equalization and the pre equalization are performed with filters of FIR type (FFEF, FFE1, DFEF, DFE1) using at least in part the same equalization coefficients (Hi', Hi) calculated for the equalization filter.

5. Method according to one of Claims 1 to 4, in which the equalization and the pre equalization are each performed with the aid of an equalizer of FFE type (FFEF, FFE1) connected in series with a filter of DFE type (DFEF, DFE1).

6. Method according to one of Claims 1 to 3, in which the equalization and the pre equalization are performed with filters of FIR type, the FIR filter or filters of the pre equalization using only significant equalization coefficients (Hi, Hi') used for the equalization.

7. Method according to one of Claims 1 to 3, in which the equalization is performed with the aid of a first filter of FIR type (FFEF, FFE1) and of a second filter of FIR type (DFEF) which are connected to the input of an adder (A3), the pre equalization being performed with the aid of a third filter of FIR type (FFE1) using the same equalization coefficients (Hi') as the first filter of FIR type, and a filter of IIR type with one stage (DFE2) using a main equalization coefficient (H1) of the second filter of FIR type, the third filter of FIR type and the filter of IIR type being connected to the input of an adder (A4).

8. Method according to one of Claims 1 to 3, in which the equalization is performed with the aid of a first filter of FIR type (FFEF, FFE1) and of a second filter of FIR type (DFEF) which are connected to the input of an adder (A3), the pre equalization being performed with the aid of a third filter of FIR type (FFE1) using the same equalization coefficients (Hi') as the first filter of FIR type, connected in series with a fourth filter of FIR type with one stage (DFE3) using an inverted main equalization coefficient (-H1) of the second filter of FIR type.

9. Method according to one of Claims 1 to 8, comprising a step of replacing each data symbol in the received signal by a symbol whose amplitude and phase correspond to those of a modulation constellation point closest to a point having the amplitude and the phase of the data symbol.

10. Demodulator of an n-PSK or n-APSK modulated signal (S) comprising a succession of symbols organized into frames (TR) each comprising a header (HD) followed by blocks of data symbols (DT) separated by blocks of pilot symbols (PL), **characterized in that** it is configured to implement the method according to one of Claims 1 to 9, the demodulator comprising

first means for applying a frequency correction to the received signal (S) and for filtering the frequency-corrected signal so as to suppress the noise outside of a transmission channel of the signal (S),

second means for determining the phase of the headers and of the pilot blocks so as to predict the evolution of the phase of the signal,

third means for correcting the phase of the data symbols (DT) as a function of the evolution of the phase of the signal (S),

an equalizer (EQU) for equalizing phase-corrected data symbols of the received signal, **characterized in that** it uses equalization coefficients (Hi, Hi') evaluated with the aid of estimated or known symbols (HD, PL, DT) of the signal, a pre equalizer (PEQ) for equalizing the header symbols and pilot symbols (HD, PL) before they are phase-corrected, by using the equalization coefficients (Hi, Hi') evaluated by the equalizer.

11. Demodulator according to Claim 10, comprising a carrier frequency shift correction loop configured to measure a shift in carrier frequency and to correct the signal to be demodulated as a function of carrier frequency shift measurements.

12. Demodulator according to Claim 10 or 11, comprising a phase-locked loop configured to determine a phase of each data symbol received on the basis of measured phases of pilot symbols transmitted before and after the data symbol, and to apply a phase shift to the data symbol as a function of the phase determined.

13. Demodulator according to one of Claims 10 to 12, in which the equalizer (EQU) and the pre equalizer (PEQ) comprise filters of FIR type (FFEF, FFE1, DFEF, DFE1) using at least in part the same equalization coefficients (Hi', Hi) calculated for the equalizer.

14. Demodulator according to one of Claims 10 to 13, in which the equalizer (EQU) comprises an equalizer of FFE type (FFEF) connected in series with a filter of DFE type (DFEF), the equalizer of DFE type comprising a circuit (DEC) for calculating equalization coefficients (Hi, Hi') of the equalizers of FFE and DFE type, the pre equalizer (PEQ) comprising a filter of FFE type (FFE1) and a filter of DFE type (DFE1) which are connected to the input of an adder (A4) and able to use only significant equalization coefficients used by the equalizer (EQU).

15. Demodulator according to one of Claims 10 to 14, in which the equalizer (EQU) comprises a filter of FFE type (FFEF) and a filter of FIR type (DFEF) which are connected to the input of an adder (A3), and a circuit (DEC) for calculating the equalization coefficients (Hi, Hi') of the filters of FFE and FIR type, the pre equalizer (PEQ1) comprising a filter of FFE type (FFE1) using the same equalization coefficients (Hi') as the filter of FFE type of the equalizer (EQU), and a filter of IIR type with one stage (DFE2) using a main equalization coefficient (H1) of the filter of FIR type of the equalizer, the filter of FFE type for pre equalization and the filter of IIR type being connected to the input of an adder (A4).

16. Demodulator according to one of Claims 10 to 14, in which the equalizer (EQU) comprises a filter of FFE type (FFEF) and a filter of FIR type (DFEF) which are connected to the input of an adder (A3), and a circuit (DEC) for calculating the equalization coefficients (Hi, Hi') of the filters of FFE and DFE type, the pre equalizer (PEQ2) comprising a filter of FFE type (FFE1) using the same correction coefficients (Hi') as the filter of FFE type of the equalizer (EQU), in series with a filter of FIR type with one stage (DFE3) using an inverted main equalization coefficient (-H1) of the filter of FIR type of the equalizer.

17. Demodulator according to one of Claims 10 to 16, in which the equalizer (EQU) is configured to replace each data symbol (DT) in the received signal by a symbol whose amplitude and phase correspond to those of a modulation constellation point closest to a point having the amplitude and the phase of the data symbol.

Fig. 1

Fig. 2

Fig. 3

Fig. 4

Fig. 5

Fig. 6

Fig. 7

Fig. 8

Fig. 9

Fig. 10

Fig. 11

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KUN-CHIEN HUNG et al.** Joint carrier recovery and multi modulus blind decision-feedback equalization under high-order QAM. *Proceedings of the IEEE Global Télécommunications Conférence (GLOBECOM),* 29 Novembre 2004, vol. 4, 2281-2285